# EUROPEAN PATENT APPLICATION

(11) **EP 1 715 437 A2**
(43) Date of publication of application: **25.10.2006**
(21) Application number: 06250976.5
(22) Date of filing: 23.02.2006
(51) Int. Cl.: G06F 21/00, H04L 29/06

(54) **Controlling data access**

(30) Priority: 22.04.2005 GB 0508211
(71) Applicant: Vodafone Group PLC, Newbury Berkshire RG14 2FN (GB)
(72) Inventor: Payne, Mike, Newbury RG19 8DB (GB)
(74) Representative: Foster, Mark Charles

(57) **Abstract**

A device or "dongle" 32 is provided for coupling to a Windows-based PC 23. The dongle 32 includes a subscriber identity module (SIM) 15, such as the type used in GSM or UMTS cellular or mobile telecommunications networks. The dongle 32 also includes flash memory 16. The flash memory 16 may have pre-stored thereon encrypted data. In order to decrypt the encrypted data on the flash memory 16, the dongle 32 generates an access token which is passed to a data controller 40. The data controller 40 selectively allows decryption of the encrypted data on the flash memory 16 by generating a release token which includes the decryption key for that data. The data controller 40 may only allow a release token to be generated if certain criteria are met. For example, the data controller may require for the successful authentication of the SIM 15 with the network 3. The data controller may only allow generation of a release token after a specific time/date. The release token is transmitted to the PC 23 via a communication channel 21 to the SIM 15 via the PC 23 that is secured end to end by keys known only the SIM 15 and the network 3.

## Description

The invention relates to controlling access to data.

People, particularly businesses, are increasingly using "flash" memory devices to store data, rather than storing data on the hard drive of a particular personal computer (PC). An advantage of these flash memory devices is that they are highly compact and can be easily carried by a user. The data on the flash memory device can be accessed by any suitable PC. The use of flash memory devices provides greater flexibility for the user: the user is no longer restricted to using a particular PC to access stored data. However, because flash memory devices are compact and are highly portable, there is a relatively high likelihood that such devices may be lost or stolen. Data stored on the flash memory device may then be accessed by an unauthorised party.

The present invention, in one aspect, seeks to provide an improved and more flexible arrangement which can be used in conjunction with flash memory and improve the security of data stored on such memory.

According to a first aspect of the invention, there is provided a method of controlling access to data, the method including distributing the data to a user in encrypted form; providing the user with authentication storage means having authentication information stored thereon; coupling the authentication storage means to authenticating means via a communications network; establishing a secure communication channel between the communications network and the authentication storage means; authenticating the user with the authentication means using the authentication information; generating an access request message to decrypt the data and transmitting this to data controller means; selectively generating a data release message in the data controller means including a decryption key means and transmitting this to the communications network; transmitting the release message to the authentication storage means via the secure communication channel; extracting the decryption key means using the authentication storage means; and decrypting the data using the decryption key means.

In the embodiment the user possesses the authentication information which allows decryption of the encrypted data. This data can be decrypted for use on any device. The data can only be accessed after the user attempting to access it has been authenticated.

According to a another aspect of the invention, there is provided apparatus for controlling access to data stored thereon in encrypted form, the apparatus including authentication storage means having authentication information stored thereon for use in authenticating the user of the apparatus with authenticating means; means for establishing a secure communication channel between a communications network and the authentication storage means; means for authenticating the user with the authenticating means using the authentication information; means for generating an access request message to decrypt the data and transmitting this to data controller means; means for receiving a corresponding data release message including a decryption key means via the communications network; and means for extracting the decryption key means and decrypting the data using the decryption key means.

A method and apparatus for controlling access to data, embodying the invention, will now be described, by way of example only, with reference to the accompanying diagrammatic drawings in which:
Figure 1 shows the basic elements of a telecommunications network;
Figure 2 is a block diagram for explaining the operation of the method in relation to the data processing apparatus;
Figure 3 is a perspective view of one configuration of a dongle; and
Figure 4 is a flow chart for use in the understanding the establishment of a communication channel between a SIM and a network operator;
Figures 5A and 5B are a flow chart for use in understanding the authentication process carried out by the data processing apparatus of Figure 2.

In the figures like elements are generally designated with the same reference numbers.

The embodiment to be described now in detail allows controlled access to data stored on a flash memory device. An arrangement is described which may allow access to data stored on a flash memory device by connecting the flash memory device to a data processing apparatus such as a PC only if the potential user of the data is authenticated by another device. For example, that other device might be a data processor belonging to an organisation or commercial entity with which the user is connected to or by whom the user is employed. The data stored on the flash memory device is encrypted. Access to the data stored on the flash memory device will only be granted when the organisation or commercial entity is satisfied that the user has a particular identity. The arrangement also allows the organisation or commercial entity to possibly restrict access to data stored on the flash memory device at certain times (by not granting permission for use of the data by the user at certain times).

Although the foregoing discussion has referred to a "user", it should be understood that a transaction involving accessing data may not necessarily involve a human user: the data processing apparatus to which the flash memory device is connected may be required to operate automatically (for example, intermittently operating with information-gathering or monitoring role). In such cases, it may alternatively or additionally be necessary for the data processing apparatus to authenticate itself to the satisfaction of the organisation or commercial entity.

Although this specification includes references to "flash" memory devices, it should be understood that the invention is applicable to any sort of memory device, and particularly (but not exclusively) to solid state storage devices.

In the embodiment of the invention a device is provided which includes flash memory and additionally authentication storage means for storing predetermined authentication information for authenticating the user of the device. In the embodiment, the device is portable and can thus be taken by the user and coupled to or associated with any data processing apparatus (or computer) which is adapted to communicate with it, so as to enable that user to be authenticated and the data stored on the flash memory accessed with that data processing apparatus.

Such a device may be a "dongle" type device which is connectable to a PC and is hereinafter referred to as a dongle, for the sake of brevity.

Advantageously, the authentication storage means comprises a smart card. In a more specific example, the smart card is a Subscriber Identity Module or SIM of the type used in and for authenticating the use of handsets in a mobile or cellular telecommunications network - such as a GSM (Group Special Mobile) or UMTS/3G (Third Generation) network. Although the term "SIM" is used herein, it should be appreciated that the SIM may be a 3G USIM, an ISIM (IP-based Multimedia Subsystem - IMS - SIM) or a UICC (Universal IC Card) - a smart card platform defined by ETSI SCP on which SIM, USIM or ISIM can reside.

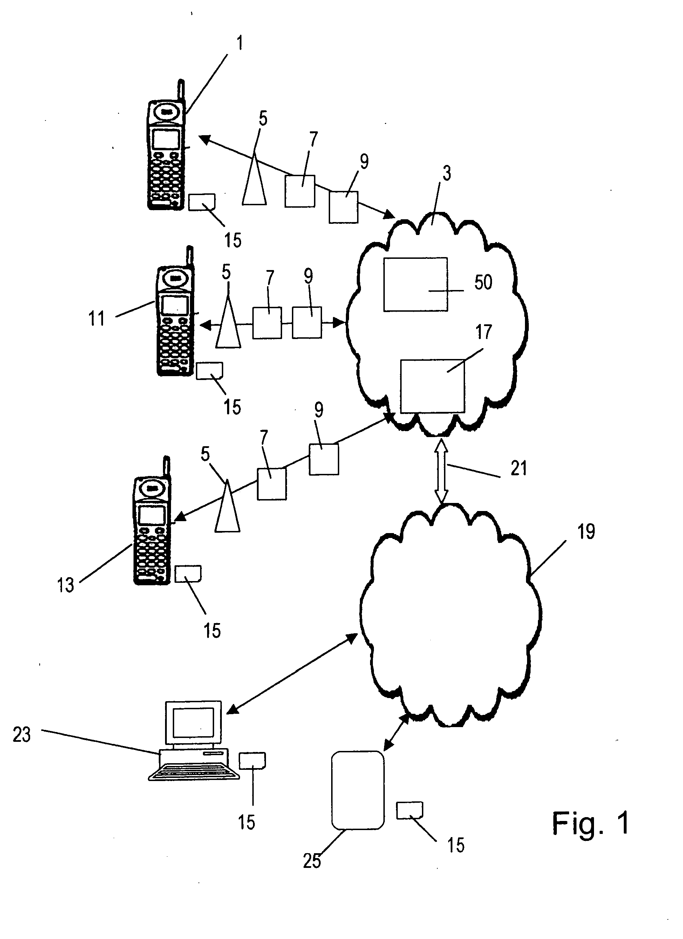

Figure 1 shows a UMTS mobile or cellular network in which the SIM may be usable. Mobile terminal 1 is registered with UMTS (3G) mobile telecommunications network 3. The mobile terminal 1 may be a handheld mobile telephone, a personal digital assistant (PDA) or a laptop computer equipped with a datacard. The mobile terminal 1 communicates wirelessly with mobile telecommunications network 3 via the radio access network (RAN) of the mobile telecommunications network 3, comprising, in the case of a UMTS network, base station (Node B) 5, and radio network controller (RNC) 7. Communications between the mobile terminal 1 and the mobile telecommunications network 3 are routed from the radio access network via serving GPRS support nodes (SGSN) 9, which may be connected by a fixed (cable) link to the mobile telecommunications network 3.

In the conventional manner, a multiplicity of other mobile terminals are registered with the mobile telecommunications network 3. These mobile terminals include mobile terminals 11 and 13. The terminals 11 and 13 communicate with the mobile telecommunications network 3 in a similar manner to the terminal 1, that is via an appropriate Node B 5, RNC 7 and SGSN 9.

The mobile telecommunications network 3 includes a gateway GPRS support node (GGSN) 17 which enables IP-based communications with other networks, such as the Internet 19 via an appropriate link 21. A multiplicity of terminals are connected to the Internet (by fixed or wireless links), and a PC terminal 23 and a PDA terminal 25 are shown by way of example.

Each of the mobile terminals 1,11 and 13 is provided with a respective SIM 15. During the manufacturing process of each SIM, authentication information is stored thereon under the control of the mobile telecommunications network 3. The mobile telecommunications network 3 itself stores details of each of the SIMs issued under its control (including the authentication information) in the SIM management function 50. According to the embodiment described, this authentication information includes a plurality of key sets, which can be used to encrypt/decrypt communications with the SIM.

In normal operation of the mobile telecommunications network 3, a terminal 1, 11, 13 is authenticated (for example, when the user activates the terminal in the network with a view to making or receiving calls) by the network sending a challenge to the terminal 1,11,13 incorporating a SIM 15, in response to which the SIM 15 calculates a reply (dependent on the predetermined information held on the SIM - typically an authentication algorithm and a unique key Ki) and transmits it back to the mobile telecommunications network 3. The SIM management function 50 of the mobile telecommunications network 3 generates the challenge and receives the reply from the terminal 1,11,13. Using information pre-stored concerning the content of the relevant SIM 15, the SIM management function 50 calculates the expected value of the reply from the mobile terminal 1,11,13. If the reply received matches the expected calculated reply, the SIM 15 and the associated mobile terminal (and the user thereof) are considered to be authenticated.

It should be understood that such an authentication process can be performed for any terminal provided with a SIM 15 under control of the mobile telecommunications network 3. When the terminal is a mobile telephone handset, the terminal communicates wirelessly with the mobile telecommunications network 3 via the network's radio access network, although this is not essential. For example, the terminal may communicate with the network via the fixed telephone network (PSTN), via a UMA "access point" and/or via the Internet. The PC 23 and the PDA 25 may also be provided with a SIM 15 under the control of the network, and these SIMs permit authentication also - although not necessarily by transmission of authentication data via the RAN of network 3.

The SIM 15 used by the terminal 1,11,13,23,25 may be a SIM of the type defined in the GSM or UMTS standards specifications, or may be a simulation of a SIM - that is, software or hardware that performs a function corresponding to that of the SIM (which may itself be embedded in another device). The SIM may be in accordance with the arrangement described in WO-A-2004 036513.

It may be desirable to be able to change the authentication information on the SIM (or simulated SIM) to take account of changed circumstances. For example, the SIM may be a SIM registered with a particular cellular telecommunications network - a network applicable to the country or region where the data processing apparatus or computer is to be used. However, circumstances may arise (for example, the apparatus or the computer is physically moved to a different country or region) in which it is desirable or necessary to re-register the SIM with a different cellular telecommunications network. Ways in which this can be done are disclosed in our co-pending United Kingdom patent applications Nos. GB 2378094, GB 2378096 and GB 2378097 and in our corresponding PCT applications Nos. WO03/01317 WO03/013173 and WO 03/013172. As described therein in more detail, a SIM (and thus also a simulated SIM) may be initially provided with authentication (and other) information relating to each of a plurality of networks, the information respective to the different networks being selectively activatable.

It is not necessary, however, for the users to be subscribers to a telecommunications network. Instead, they could be subscribers registered with some other centralised system which could then carry out the authentication process in the same way as in a telecommunications network. In such a case, the registration of a SIM (or simulated SIM) could be transferred from one such centralised system to another in the same manner as described above.

As described above, an aim of the authentication process in the embodiment to be described is to facilitate a transaction (the accessing of encrypted data) between the data processing apparatus or computer and a third party. Where the authentication process is carried out by a telecommunications network, or by some other system, to which the user of the SIM is a subscriber, the satisfactory completion of the authentication process may then be communicated to the third party - to enable the transaction to proceed.

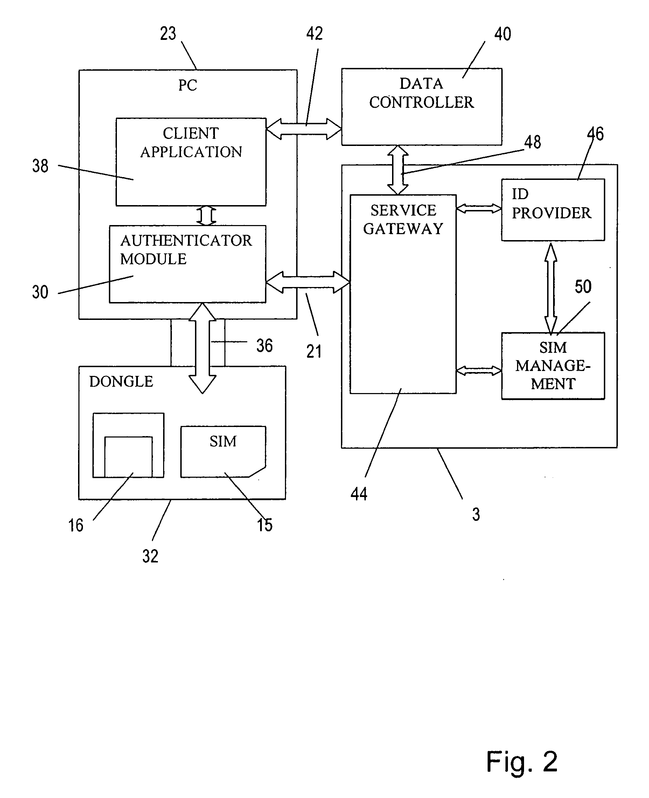

The block diagram of Figure 2 schematically illustrates one way of operating the method described above.

A client platform, such as a Windows (RTM) based PC 23, includes an authenticator module 30 which forms part of a client sub-system. A dongle 32 having a SIM 15 and flash memory 16 therein is provided, and communication between the dongle 32 and the authenticator module 30 is performed via connection 36 (which may be a wired or wireless connection).

A client application 38 is provided on the PC 10, which allows the user to obtain services a remote data controller 40. It should be understood that by "remote" it is not intended to imply that there must be a particular geographical distance between the PC 23 and the data controller 40. However, generally the data controller 40 will be controlled independently of the PC 23 - although this is not essential. The data controller 40 is responsible for at least some of the data on the flash memory 16, and in particular is responsible for controlling the use of the data. For example, the data controller 40 may be part of the network of the employer of the user of the dongle 32.

The flash memory 16 may have pre-stored thereon data that is encrypted. Such data cannot be interpreted without a secret key used to decrypt the data. The encrypted data may be pre-stored on the flash memory 16 during manufacture of the flash memory 16, by the dongle 32 including the flash memory 16 being coupled to another data processing apparatus (such as by one controlled by data controller 40) and downloading the encrypted data onto the flash memory 16, or in any other way. In an alternative arrangement, encrypted data may be downloaded onto the dongle 32 remotely - for example via the Internet.

The presence of such encrypted data on the dongle 32 will be apparent to the user while the dongle 32 is associated with the PC 23. A directory of files stored on the dongle 32 will be accessible using the graphical user interface of the PC 23. However, the content of the files that are encrypted on the dongle 32 will not be available to the user at this stage. The content is only made available after an authentication process by the data controller 40 to be described in more detail below.

In this embodiment a mobile telecommunication network 3 provides via a service gateway 44, an identity provider service 46, and SIM management service 50. It should be understood that the network 3 may be any type of network - the invention is not restricted to mobile telecommunication networks. For example, the service gateway 44 may be provided in a computer that is linked to PC 23 by a local area network, a wide area network and/or the Internet.

The dongle 32 may allow wired or wireless communication with the PC 23. Preferably, the communication between the dongle 32 and the PC 23 is secure. The communications may be encrypted, or any other means for secure communication may be employed.

The dongle 32 may receive the SIM 15, or may incorporate software or hardware simulating a SIM 15. The SIM or simulation of the SIM 15 is operable to perform the same authentication functions of the SIM 15 described in relation to Figure 1. The dongle 32 allows data for authenticating a transaction (or for any other appropriate purpose) to be passed between the dongle 32 and the PC 23 and onwardly to/from the network. Appropriate connectors are provided within the dongle 32 for allowing electronic exchange of data between the SIM 15 and the dongle 32. The dongle 32 connector 36 allows connection for data communication purposes to the PC 23. For example, the connector 36 could be a USB connector, a Firewire 1394 connector, a SmartMedia (RTM) connector, a near field connector (e.g. using NFCIP-1 protocol), Bluetooth (RTM) connector, infra-red connector or any other suitable connector.

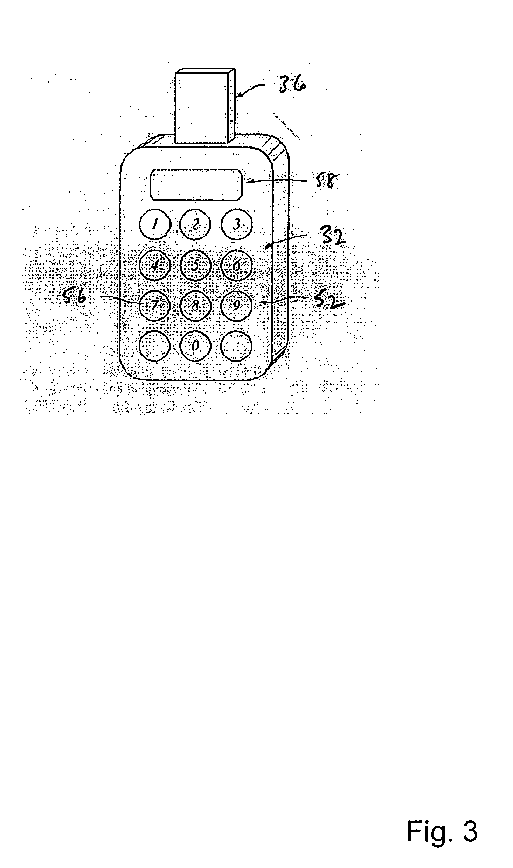

The housing 52 of the dongle 32 shown in Figure 3 has a variety of push buttons 56 mounted thereon, ten of which have respective numerals from 0 to 9 displayed thereon. In this embodiment, the dongle 32 includes means (such as software) for receiving the entry of a PIN number from a user by operating the appropriately designated push buttons 56. The housing 52 may further optionally provide a display 58 for prompting the user to enter their PIN number and/or for displaying the PIN number as it is entered, if desired, as well as other information.

It should be appreciated that as an alternative to push buttons 56, other means could be provided for allowing PIN entry. Alternatively, the user could be authorised to use the SIM 15 by obtaining some other security information from the user and comparing this with data stored on the SIM 15. For example, the data obtained could be the user's fingerprint or some other characteristic which is unlikely to re-occur on another person - for example, any suitable biometric data. The details of a previously stored fingerprint (or other information) may be stored on the SIM or the network 3 (or elsewhere) for comparison with the input data representing the characteristics.

In the above description it has been indicated that the SIM used to authenticate the transaction could have the form of a conventional SIM which is provided in the dongle 32. This could simply be the SIM that a subscriber to a mobile network uses in their conventional mobile telephone handset to make and receive calls. Alternatively, the SIM 15 could be removably fitted directly to the PC 23 or embedded within the PC 23 (such that it cannot be readily removed or cannot be removed at all). Further alternatively, as mentioned above, the SIM may not have a separate physical form, but may be simulated by means of software and/or hardware within the PC 23 or the dongle 32. The SIM could be simulated or incorporated into the chip set of the PC 23. For example, the SIM could be incorporated or simulated within the central processor unit of the PC 23. Such an arrangement prevents the SIM (or simulated SIM) being removed from the PC 23 (other than by rendering the PC 23 useless).

If the SIM is of a form that is not readily removable from the PC 23 or dongle 32, a subscriber to the telecommunications system may be provided with a second SIM for use, for example, in their mobile telephone handset.

If, however, the same SIM is used (in the PC 23 or the dongle 32) to authenticate transactions and for use in the conventional manner with the telecommunications network 3 (for example, to make and receive calls using a mobile telephone handset), the same data may be used to provide authentication of transactions as is used to authenticate the SIM with the mobile telephone network 3 when a call is being made. Alternatively, the SIM may have separate records for performing each authentication type. There may be a first record containing data and/or algorithms for use in authenticating transactions, and a second, separate record for use in the conventional manner for authenticating the terminal with the telecommunications network 3. The first and second records may have respective authentication keys, unique identifiers to the telecommunications network 3 and/or unique authentication algorithms. The mobile telephone handset need not be authenticated with the network 3 for the SIM to authenticate a transaction for the PC 23.

The dongle 32 may also perform the functions of a conventional data card for use with a PC (or other computing device). The dongle will therefore include means for wireless telecommunication with the network 3. With this arrangement, the dongle will be of a suitable size and will include suitable connectors for allowing it to operate as a data card, in addition to the dongle having the functions described above.

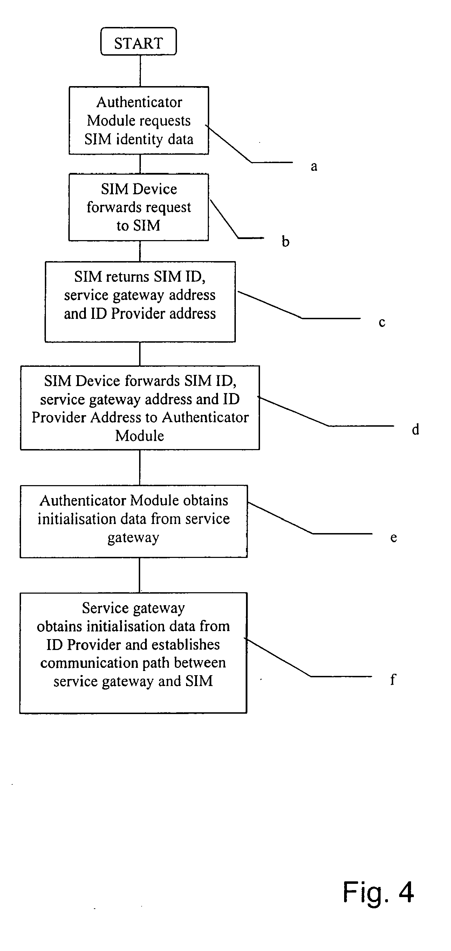

When the PC 23 is initially powered-up with the SIM 15 coupled thereto, or when the SIM 15 is first coupled to the already-on PC 23 (via the dongle 32), the following initialisation process is performed, as illustrated by the flow chart of Figure 4.

The authenticator module 30 requests from the SIM 15 data identifying that SIM, and an indication of the identity provider 46 and service gateway 44 to which it belongs (that is the identity provider and service gateway associated with the SIM management function 50 under the control of which the SIM 15 was issued, for example) - step a. These requests by the authenticator module 30 for data from the SIM 15 are passed from the authenticator module 30 to the dongle 32. The dongle 32 forwards the request to the SIM 15 - step b. The SIM 15 returns its identity data, the service gateway 44 address and the address of its identity provider 46 - step c. The SIM device 32 forwards this data to the authenticator module 30 - step d.

The authenticator module 30 then contacts the service gateway 44 via link 21 to request initialisation data therefrom - step e. The authenticator module 30 may be provided with a "global" key - for example, a key that is provided to all authenticator modules 30 issued under control of the network 3. Such a key may be obfuscated in implementation. Also, the key may be updated if it is compromised. The authenticator module 30 provides the global key to the service gateway 44 to verify the integrity of the authenticator module 30. The initialisation data request is passed by the service gateway 44 to the identity provider 46. The identity provider checks the SIM identity data, service gateway 44 address and identity provider 46 address, and if this information is determined to be correct, the identity provider 46 generates initialisation data for the service gateway 44 which enable the service gateway 44 to establish a communication path or tunnel to the SIM 15 (via the authenticator module 30 and dongle 32) - step f. As indicated above, authentication information for each SIM is stored by the SIM management function 50. The ID provider 46 selects a suitable key set (using key set data obtained from the SIM management function 50) for encrypting the content of the data packets transmitted over the communication path. The header of each data packet includes an indication of the key set selected - but not the keys themselves. This header data is received by the SIM 15 via link 21 and the key set indicator is identified. The corresponding key set provided in the SIM 15 during manufacture is accessed and used to decrypt messages received from the service gateway 44 during the communication session now established. Optionally, new key sets may be transmitted to the SIM 15 and corresponding key sets stored in the SIM management function 50, in order to allow new key sets to be used to encrypt messages.

If, for example, the dongle 32 is recorded by the network 3 as lost or stolen, the network will not allow the establishment of a communication session, thereby preventing authentication of the SIM 15 and access to the data on the flash memory 16.

The data packets are not necessarily transmitted over the air (wirelessly). They may be transmitted over the air or they may be transmitted over a fixed (wired network) including the Internet.

The subscriber will thereafter be authenticated by the service gateway 44 performing a challenge and response session with the SIM (by sending data via the authenticator module 30 and link 21). The service gateway 44 will send a random challenge to the authenticator module 30, which is transmitted to the SIM 15. This challenge is sent as an data packet that is encrypted using a selected key set in the manner described above. The SIM 15 decrypts the data packet using the corresponding key set stored on the SIM 15. The decrypted challenge is then extracted. The SIM 15 generates a response by encrypting the random challenge using both an authentication algorithm and a unique key Ki resident within the SIM 15 and assigned to that SIM (and the user thereof). The response is encrypted using the selected key set and encapsulated in a data packet with a header indicating the key set used (and also the nature and destination of the data packet). The data packet is transmitted to the service gateway 44 via the authenticator module 30. The service gateway 44 decrypts the data packet using the key set data obtained from the SIM management function 50 via the ID provider 46. The decrypted SIM response is then passed to the ID provider 46. The ID provider 46 analyses the response to determine whether it is the response that would be expected from that subscriber's SIM 15 (again using data obtained from the SIM management function 50). If the response is as expected, then the SIM 15 is considered to be authenticated by the network. The authenticator module 30 itself need not understand the data exchanged during the challenge and response procedure - it merely acts as a conduit for this data - indeed, it will not be able to decrypt the data packets because the key sets are not known to it.

As an additional security measure, the challenge data packet generated by the service gateway 44 may include a command which requires the subscriber to provide some security data, such as a PIN or biometric data. This command is extracted and executed by the SIM 15. The SIM 15 then sends a command to the dongle 32 to prompt the user to enter their PIN using the buttons 56 (or to provide biometric data). The PIN (or biometric data) is encapsulated in the encrypted response data packet, and is compared with a pre-stored PIN or biometric data that the subscriber has previously provided to the ID provider 46.

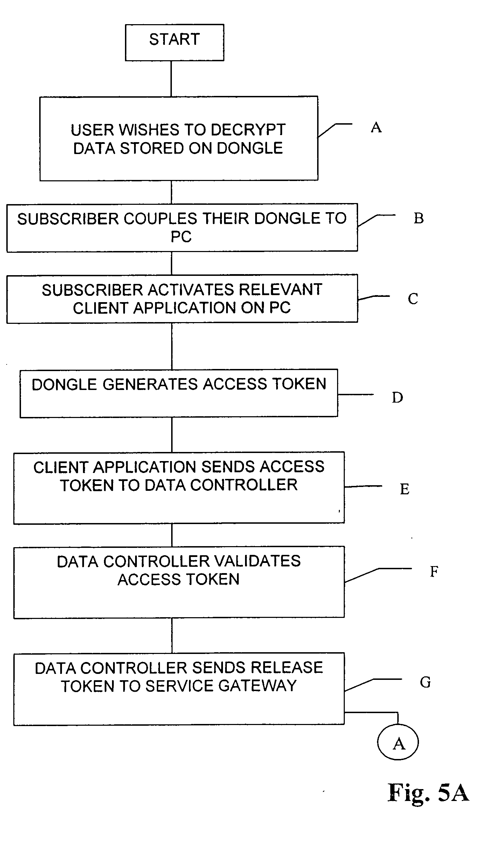

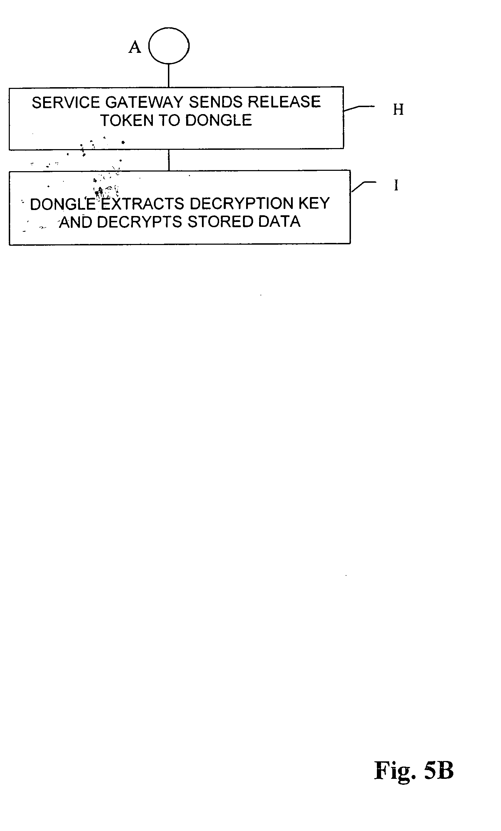

Reference will now be made to the flow chart of Figures 5A and 5B.

When the subscriber wishes to access encrypted data on the dongle 32 (step A of the flow chart shown in Figure 5A), the subscriber couples their SIM 15 to the PC 23 by inserting their dongle 32 containing the SIM 15 into the appropriate connecting slot of the PC 23 or using a wireless link or starts-up the PC23 with the dongle 32 coupled thereto (step B). The subscriber is able to view the files stored on the flash memory 16 of the dongle 32 in the conventional manner using the graphical user interface of the PC 23. However, the content of the files is not accessible because this is encrypted.

The coupling of the dongle 32 to the PC23 triggers the authentication process described above. When the subscriber wishes to access (that is, decrypt) an encrypted data file, the client application 38 on the PC 23 is activated, for example by "clicking" on an icon provided on the graphical user interface of the PC 23) - step C. This client application may be special software provided under control of the data controller 40 for installation on the subscriber's PC 23. Alternatively, the client application 38 may be a web browser that enables access to an appropriate website controlled by the data controller 40. The data controller 40 may enable the establishment of a Virtual Private Network (VPN) or other communication channel 42 between the client application 38 and the data controller 40. The data communication between the client application 38 and the data controller 40 may be by a fixed network (e.g. PSTN) or by a wireless network - such as the network 3 or another mobile or cellular communications network.

The subscriber then identifies the encrypted data on the flash memory 16 of the dongle 32 that they wish to access for example, using the graphical user interface of the PC 23). The authenticator module 30 transmits this request for access of the data from the PC 32 to the dongle 32 via the link 36. The SIM 15 or other processing means on the dongle 32) then generates an access token used for obtaining decryption information from the data controller 40. The access token includes data identifying the data on the flash memory 16 requiring decryption, data identifying the subscriber (such as the subscriber's SIM identifier) and data identifying the relevant data controller 40. Additional or alternative information may of course be provided in the access token. Generation of the access token is step D of the flow chart.

The access token is passed from the dongle 32 to the client application 38 via the authenticator module 30 of the PC. The access token is then transmitted to the data controller 40, for example via the VPN established between the client application and the data controller 40 - step E. Because the encrypted data stored on the flash memory 16 of the dongle 32 or stored by or under control of the data controller 40, the data controller 40 is able to identify a record thereon corresponding to the relevant data stored on the flash memory 16. The data controller 40 will then make a decision as to whether access to the encrypted data by the subscriber is to be permitted. For example, some data stored on the flash memory 16 may only be accessible at certain times.

For example, if the encrypted data stored on the flash memory 16 related to a commercially sensitive announcement of the subscriber's employer, the data controller 40 could be configured to only allow decryption of that announcement after a particular time and date. In another example, rather than the information on the flash memory 16 being provided by a subscriber's employer, this information could be a selection of music tracks pre-stored on the flash memory 16 when the dongle 32 is purchased by a subscriber. The distributor of the music tracks may wish to only allow access to some of the music tracks after a certain time/date. For example, some of the music tracks may be "unreleased" music tracks at the time that the encrypted data representing the music tracks is pre-stored on the flash memory 16. The data controller 40 will only allow a request for decryption of data in an access token relating to such music tracks after the time/date specified by the distributor of that music track.

The data controller 40 validates the access token (step F) if the data requiring decryption meets or does not have any time/date restrictions of the type described above, and if it satisfies certain other criteria - for example, that the subscriber is known to the data controller 40 and has a valid subscription with the network 3. The validity of the subscription is determined in a data exchange between the data controller 40 and the service gateway 44 of the network 3 via link 48. The data controller 40 may also verify that the subscriber (or their SIM 15) is currently authenticated with the network 3 in the manner described above. When the data controller 40 is satisfied that the relevant encrypted data can be accessed (decrypted), the data controller 40 sends a release token to the service gateway 44 via link 48 - step G.

The release token is then encapsulated by the service gateway 44 in a data packet and is encrypted using the agreed key set described in relation to Figure 4. The data packet is transmitted in the secure communication channel that was previously established (as described with reference to Figure 4) between the service gateway 44 and the SIM 15 via the authenticator module 30.

The release token includes data specific to a particular subscriber and decryption transaction with a particular data controller 40. Numerous such transactions (and other types of transactions) may be handled by the network 3, authenticator module 30 and data controller 40 in parallel. Release tokens relating to these different transactions will be distinguishable from one another by virtue of the data specific to each particular transaction in the release token for each transaction.

If the release token is intercepted as it passes between the service gateway 44 of the network 3 and the SIM 15 it will have no value to the interceptor. Firstly, the release token is encapsulated in an encrypted data packet and therefore the content of the release token will be meaningless without knowledge of the keyset agreed between the SIM 15 and service gateway 44 at the establishment of the communication channel. Secondly, the release token is specific to the decryption of particular data on a particular dongle 32, and cannot be used to decrypt other data.

The release token is transmitted from the service gateway 44 via the authenticator module 30 to the dongle 32 in step H. The data packet within which the release token is encapsulated may include a command, requiring the dongle to obtain from the subscriber their PIN (or biometric data). This is then returned to the service gateway 44 and compared to pre-stored data provided by the subscriber previously. The decryption process is only allowed to proceed if a message is returned to the dongle 32 by the service gateway 44, indicating that the PIN/biometric data is correct. The SIM 15 extracts the release token from the encrypted data packet using the appropriate key set (i.e. the data packet is decrypted). The encrypted data to which the release token relates is retrieved from the flash memory 16 and is decrypted using the key contained in the release token - step I. The decrypted data is then transmitted from the dongle 32 to the authenticator module 30 of the PC 23 via the link 36. The decrypted data can then be used by the subscriber in the manner that they wish (subject to any restrictions that might be applied by the data controller 40).

For example, the data controller 40 may include in the release token certain restrictions on the use of the encrypted data on the flash memory 16. The release token may include a field which indicates that the encrypted data can be released in a read-only format. Therefore, when such data is made available to the subscriber via the authenticator module 30, the subscriber will not be able to edit that data. Of course, other types of restrictions could also be applied to the use of the decrypted data.

If the subscriber is able to amend the data, the facility may be provided for that data to be stored on the flash memory 16 in encrypted form. The amended data will be transmitted from the authenticator module 30 to the dongle 32 via the link 36. The key used to decrypt that data (from the release token) may be used by the dongle 36 to encrypt the amended data. The encrypted data can then be stored on the dongle 16. Subsequent access to that data may be allowed only after the generation of a new access and release token in the manner described above. Alternatively, access to that data may be facilitated by the release token previously provided to the dongle 32. Preferably, such a release token is only available for decryption of the data in the flash memory 16 for a predetermined time period (or for a predetermined number of uses), whereafter the release token is rendered unusable (for example by being erased). By way of example, the release token may be usable until the operating system of the PC is shut down and/or until the dongle 32 is uncoupled from (or otherwise disassociated with) the PC 23.

In addition to requiring the obtaining of a release token to access encrypted data stored on the flash memory 16, the arrangement may be configured to require the obtaining of a new release token to perform certain actions in relation to that data. For example, if the user wishes to amend that data or print that data, the authenticator module 30 may inhibit the performance of these functions and require that the dongle 32 generates an appropriate access token for transmission to the data controller 40 via the client application 38. Amendment of the data or printing of the data will only be allowed when a release token is received from the service gateway 44. Such a release token will only be provided if the data controller 40 permits amendment or printing of the data 40.

In the embodiment described above the access tokens are transmitted from the client application 38 to the data controller 40 via a VPN 42 established between those devices. Alternatively, an access token may be transmitted from the authenticator module 30 to the service gateway 44 of a network 3 via the link 21, whereafter the access token is transmitted to the data controller 40 via the link 48.

An advantage of the embodiment described above is that the release token containing the decryption keys is transmitted in a secure communication channel established between the dongle 32 and the service gateway 44 of the network 3. The data packet containing the release tokens is encrypted using a key set known only to the SIM 15 and the network 3. Even if it were possible for the data packet containing the release token to be intercepted when transmitted between the network 3 and the PC 23 or between the PC 23 and the dongle 32, or by a rogue application on the PC 23, the content of the data packet would be unusable due to its encryption.

In addition to encrypted data of the type described above, which is only accessible after authentication by the remote data controller 40, the flash memory 16 may also include a part which stores unencrypted data and allows unrestricted access to that data. Another part of the flash memory 16 may be locally secured. Locally secured data is encrypted using a respective encryption key that is obtained every time the SIM 15 is authenticated with the network 3 as described above. In such a locally secured scheme, the SIM 15 will need to maintain a record of previous keys obtained at authentication in order that the encrypted data stored on the SIM can be decrypted using those keys. In order to access the locally secured data on the SIM, the user will be required to enter their PIN for comparison with a previously stored PIN for that user.

The communications between the PC 23 and the network 3 are preferably encrypted, as described above. It is also preferable for communications between the components within the PC 23 and within the network 3 to be encrypted - for example by use of shared keys.

In an alternative embodiment, encrypted data is stored on the PC 23 itself or on media other than the flash memory 16. Access to that data may be controlled by a dongle 32 in the manner described above (although the dongle 32 need not include flash memory 16). The dongle 32 generates an access token when the subscriber wishes to decrypt the encrypted data. This is sent to the data controller and validated in the manner described above. When a release token is received by the dongle 32 from the service gateway 44, the relevant decryption key is extracted by the dongle 32. The decryption key may be passed to an application on the PC 23 (for example the authenticator module 30) which then decrypts the encrypted data stored on the PC 23. Alternatively, the encrypted data may be passed from the PC 23 to the dongle 32 via the link 36. The decryption key from the release token is used to decrypt the data within the dongle 32. The decrypted data is then passed via the link 36 to the authenticator module 30 for subsequent use by the subscriber. The latter arrangement has the advantage that the decryption key is retained within the dongle 32 and is not released into the environment of the PC 23.

## Claims

1. A method of controlling access to data, the method including distributing the data (16) to a user in encrypted form; providing the user with authentication storage means (15) having authentication information stored thereon; coupling the authentication storage means (15) to authenticating means (15) via a communications network (3); establishing a secure communication channel (21) between the communications network (3) and the authentication storage means (15); authenticating the user with the authentication means (15) using the authentication information; generating an access request message to decrypt the data and transmitting this to data controller means (40) selectively generating a data release message in the data controller means (40) including a decryption key means and transmitting this to the communications network (3); transmitting the release message to the authentication storage means (15) via the secure communication channel (21) extracting the decryption key means using the authentication storage means (15) and decrypting the data (16) using the decryption key means.

2. The method of claim 1, wherein the authentication storage means (15) is coupled to the authenticating means by data processing apparatus (23).

3. The method of claim 2, wherein the data processing apparatus (23) generates the access request.

4. The method of claim 1,2 or 3, including storing the data on a portable storage device (32).

5. The method of claim 4, wherein the portable storage device (32) includes flash memory (16).

6. The method of claim 4 or 5, wherein the portable storage (32) device also comprises the authentication storage means (15).

7. The method of any one of claims 2 to 6, wherein the portable storage device (32) is operatively coupled to the data processing apparatus (26).

8. The method of any one of claims 1 to 7, wherein the data controller (40) only generates a release message if the authentication storage means (15) is authenticated with the network (3).

9. The method of any one of claims 2 to 8, wherein the secure channel (21) extends through the data processing apparatus (23).

10. The method of any one of claims 1 to 9, wherein the release message is encrypted using a further key means prior to the transmission thereof via the secure communications channel (21).

11. The method of claim 10, wherein the further key means is known only to the authentication storage means (15) and to the communications network (3).

12. The method of any one of claims 1 to 11, wherein the authentication storage means (15) comprises a smart card.

13. The method of any one of claims 1 to 12, wherein the authentication storage means (15) includes a subscriber identity module or SIM.

14. The method of claim 12 or 13, wherein the authentication storage means (15) includes data for authenticating the entity with a GSM or UMTS (3G) mobile telecommunications network.

15. The method of claim 14, wherein the authentication information stored on the authentication storage means (15) is usable to authenticate a mobile telephone device or handset with the communications network. (3)

16. The method of any one of claims 1 to 15, wherein the authenticating means (15) is associated with a GSM or UMTS mobile telecommunications network.

17. The method of any one of claims 1 to 16, wherein the communications network (3) includes a GSM or UMTS mobile telecommunications network.

18. The method of any one of claims 1 to 17, wherein the communications network (3) includes the Internet (19).

19. The method of any one of claims 1 to 18, including prompting the use to provide identity data.

20. The method of claim 19, wherein the identity data includes a PIN or biometric data.

21. The method of claim 19 or 20, wherein the identity data is transmitted to the authenticating means (50).

22. The method of any one of claims 1 to 21, wherein said authentication storage means (15) and said authenticating means (50) are provided with corresponding encryption and decryption schemes.

23. The method of claim 22, including establishing the secure communication channel (21) between the authentication storage means (15) and the authenticating means (50) using one of said schemes and encrypting data in at least one of said messages in accordance with that scheme.

24. The method of any one of claims 1 to 23, wherein said authenticating step includes transmitting a challenge from the authenticating means (50) to the authentication storage means (15), and receiving a corresponding response from the authentication storage means (15).

25. The method of any one of claims 2 to 24, including establishing a Virtual Private Network (VPN) between the data processing apparatus (23) and the data controller (40) and transmitting the access request message to the data controller using the VPN.

26. Apparatus for controlling access to data stored thereon in encrypted form, the apparatus including authentication storage means (15) having authentication information stored thereon for use in authenticating the user of the apparatus with authenticating means (50); means for establishing a secure communication channel (21) between a communications network (3) and the authentication storage means (15); means for authenticating the user of the apparatus with the authenticating means (15) using the authentication information; means for generating an access request message to decrypt the data and transmitting this to data controller means (40); means for receiving a corresponding data release message including a decryption key means via the communications network (3); and means for extracting the decryption key means and decrypting the data using the decryption key means.

27. The apparatus of claim 26, wherein the authentication storage means is operatively coupleable to the authenticating means by data processing apparatus (23).

28. The apparatus of claim 27, wherein the data processing apparatus is operable to generate the access request.

29. The apparatus of claims 26,27 or 28, wherein the apparatus comprises a portable storage device (32) for storing the data.

30. The apparatus of claim 29, wherein the portable storage device (32) includes flash memory.

31. The apparatus of claim 30, wherein the portable storage device (32) is operatively coupleable to the data processing apparatus (23).

32. The apparatus of any one of claims 26 to 31, operable and/or adapted to perform the method as claimed in any one of or combination of claims 8 to 25.
